# EUROPÄISCHE PATENTSCHRIFT

(11) **EP 1 841 925 B1**
(45) Veröffentlichungstag und Bekanntmachung des Hinweises auf die Patenterteilung: **17.08.2011**
(21) Anmeldenummer: 06706384.2
(22) Anmeldetag: 24.01.2006
(51) Int. Cl.: E03C 1/08, B01D 35/04

(54) **ZWEITEILIGER DURCHFLUSSMENGENREGLER, STRAHLREGLER ODER RÜCKFLUSSVERHINDERER MIT SCHNAPPVERBINDUNG ZWISCHEN DEN BAUTEILEN**
TWO-PART FLOW REGULATOR, JET REGULATOR, OR BACKFLOW PREVENTER COMPRISING A SNAP-IN JOINT BETWEEN THE PARTS
REGULATEUR DE DEBIT, REGULATEUR DE JET OU DISPOSITIF ANTI-REFLUX EN DEUX PARTIES ASSEMBLEES PAR ENCLIQUETAGE

(30) Priorität: 25.01.2005 DE 202005001101 U; 05.09.2005 DE 102005042212
(43) Veröffentlichungstag der Anmeldung: 10.10.2007
(60) Teilanmeldung: 08001594.4
(73) Patentinhaber: Neoperl GmbH, 79379 Müllheim (DE)
(72) Erfinder: GRETHER, Hermann, 79379 Müllheim (DE)
(74) Vertreter: Maucher, Wolfgang
(86) Internationale Anmeldenummer: PCT/EP2006/000602
(87) Internationale Veröffentlichungsnummer: WO 2006/079505

(56) Entgegenhaltungen:
- EP-A- 0 733 748
- WO-A-2004/038112
- DE-A1- 3 817 270
- DE-A1- 4 413 060
- DE-A1- 19 618 692
- DE-C- 639 026
- DE-U1- 29 718 727
- DE-U1-202005 001 101
- DE-U1-202005 010 640
- GB-A- 2 233 246

## Beschreibung

Die Erfindung betrifft ein sanitäres Einbauteil mit zumindest zwei Bauteilen, von denen das erste Bauteil als ein Vorsatz- oder Filtersieb ausgebildet ist und in eine Aufnahrnaöffnung des als Strahlregler, Durchflussmengenregler oder Rückflussverhinderer ausgebildeten zweiten Bauteiles einsetzbar ist, wobei die Bauteile miteinander verrastbar sind und hierzu ein Bauteil zumindest ein Rastmittel und das andere Bauteil ein diesem Rastmittel als Gegenstück dienendes Gegenrastmittel aufweist, wobei eines dieser Bauteile das Rastmittel außen- oder innenumfangsseitig an einem Wandungsabschnitt trägt.

Man kennt bereits verschiedene sanitäre Einbauteile, die einen Strahlregler, einen Durchflussmengenregler und/oder einen Rückflussverhinderer aufweisen. Um die Funktion eines solchen sanitären Einbauteiles dauerhaft zu gewährleisten und um dem Eintritt von im Wasser mitgeführten Schmutzpartikeln in den Strahlregler, den Durchflussmengenregler oder den Rückflussverhinderer entgegenzuwirken, weisen die vorbekannten sanitären Einbauteile zuströmseitig meist ein Vorsatzsieb auf. Dabei ist dieses Vorsatzsieb in eine stirnseitige Aufnahmeöffnung des abströmseitig nachgeschalteten Strahlreglers oder dergleichen Bauteiles einsetzbar und dort mittels einer Rast- oder Schnappverbindung gehalten.

Damit die an diesen Bestand- oder Bauteilen der vorbekannten Einbawteile vorgesehenen Rastmittel leicht miteinander verrastet werden können, müssen die Bauteile insbesondere auch im Bereich ihrer Rast- oder Schnappverbindung entsprechend exakt und ohne größere Fertigungstoleranzen hergestellt werden. Die Herstellung dieser Bauteile ist daher allein schon deswegen mit einem vergleichsweise hohen Fertigungsaufwand verbunden.

Aus der DE 38 17 270 A1 ist bereits ein Strahlregler-Einsatz bekannt, der in das Auslaufmundstück einer sanitären Wasserauslaufarnatur einsetzbar ist. Zum Abbauen eines sich in Folge von Verschmutzung rückseitig des Einsatzes zunehmend aufbauenden Rückstaudruckes ist der Durchlassquerschnitt des Strahlreglers bei Überschreitung eines vorgebbaren Rückstaudruckes vergrößerbar, indem der Strahlregler-Einsatz aus seiner Normalbetriebsstellung freigegeben wird und in eine Auslösestellung gelangt, in der um den Einsatz herum ein den Gesamtdurchtrittsquerschnitt vergrößernder Ringkanal gebildet ist. Dazu wird der Strahlregler-Einsatz von der Auslaufseite her in das Auslaufmundstück eingesetzt und dort durch eine Haltevorrichtung gehalten. Diese Halzevorrichtung ist Bestandteil einer Auslösevorrichtung, die den Strahlreglereinsatz bei Überschreiten eines vorgebbaren Rückstaudruckes freigibt. Diese Haltevorrichtung weist zum Halten des Strahlregler-Einsatzes in Normalbetriebsstellung Federbügel auf, die außenumfangsseitig über die Umfangswandung des Strahlregler-Einsatzes vorstehen und an ihren freien Enden Rastrippen tragen. Die Federbügel weisen mit ihren freien Enden entgegen der Durchströmrichtung und greifen mit ihren Rastrippen in eine umlaufende Ringnut im Auslaufmundstück ein.

Da bei dem aus DE 38 17 270 A1 vorbekannten Strahlregler-Einsatz die Rastrippen auch in eingefedertem Zustand der Federbügel nicht in den vom Wandungsaußenumfang festgelegten Hüllkreis des Strahlregler-Einsatzes eintauchen können, ist für das rastbedingte Ein- und Ausfedern der Federbügel stets ein entsprechend großes axiales Spiel zwischen dem Wandungsaußenumfang des Strahlregler-Einsatzes einerseits und dem Innenumfang des Auslaufmundstückes andererseits notwendig. Ein solches axiales Spiel ist zwar dort ohne weiteres möglich, wo der Leitungsquerschnitt in Durchströmrichtung sich vergrößern kann, - bei solchen Bauteilen jedoch, in denen der Verbindungsbereich stets der wasserströmung ausgesetzt ist, ist meist eine möglichst passgenaue Verbindung ohne größeres axiales Spiel anzustreben.

Aus der wo 2004/038112 A ist ein Zwischenhalter bekannt, der auslaufseitig in den Wasserauslauf einer sanitären Auslaufarmatur einschraubbar und in den ein Strahlregler einsetzbar ist. Um die Funktion des in den Zwischenhalter eingesetzten Strahlreglers zu sichern, ist der Zwischenhalter zuströmseitig mit einem Vorsatzsieb verrastbar. Dieses Vorsatzsieb trägt an seinem Siebaußenumfang einen umlaufenden Rastwulst, der in die Rastnuten mehrerer kronenförmig vorstehender Federbügel des zwischenhalters eingreift. Zwar ist zwischen dem den Rastwulst tragenden Wandungsabschnitt des vorsatzsiebes und der kegelförmigen Siebfläche eine als Ringnut ausgebildete Aussparung vorgesehen, jedoch ist der den Rastwulst tragende Wandungsabschnitt derart massiv ausgebildet, dass ein Einlenken dieses Wandungsabschnittes nicht ohne weiteres möglich erscheint. Um die zwischen dem Vorsatzsieb und dem Zwischenhalter vorgesehene Rastverbindung lösen zu können, sind vielmehr die kronenförmig vorstehenden Federbügel am Zwischenhalter auslenkbar, die jedoch die axiale Längserstreckung des Zwischenhalters nicht unwesentlich vergrößern.

Aus der DE 20 2005 001 101 U1 kennt man bereits ein Filtersieb für Wasserauslaufarmaturen, das in die Aufnahmeöffnung eines abströmseitig nachgeschalteten Strahlreglers einsetzbar und dort lösbar verrastbar ist. In der DE 20 2005 001 101 U1 ist nicht näher beschrieben, wie die zwischen Filtersieb und nachgeschaltetem Strahlregler vorgesehene Rastverbindung ausgestaltet sein soll. Um selbst in montiertem Zustand die Funktionalität des dem Filtersieb nachgeschalteten sanitären Einsetzteiles überprüfen zu können, ist das aus DE 20 2005 001 101 U1 vorbekannte Filtersieb aus einem transparenten Kunststoffmaterial hergestellt. Da das vorbekannte Filtersieb aus transparentem Kunststoffmaterial hergestellt ist, lässt es die Sicht auch auf seine Abströmseite selbst dann zu, wenn das Filtersieb an weiteren sanitären Einsetzteilen montiert und/oder in ein Auslaufmundstück eingesetzt ist.

Aus der nachveröffentlichten DE 20 2005 010 640 U1 kennt man bereits einen mit DE 20 2005 001 101 U1 vergleichbaren Strahlregler, der in einer zuströmseitigen Aufnahmeöffnung seines Strahlregler-Gehäuses ein Vorsatzsieb trägt. Um diese sanitäre Einsatzeinheit an unterschiedliche Nutzer- und Einsatzanforderungen anpassen zu können, sind die Bestandteile der aus DE 20 2005 010 640 U1 vorbekannten Einsetzeinheit austausch- und kombinierbar. Dazu sind am oder im Hülsenkörper des hülsenförmigen Strahlregler-Gehäuses Befestigungsmittel und an der Zerlegerplattenanordnung korrespondierende Befestigungsmittel vorgesehen, wobei die Zerlegerplattenordnung zumindest außenseitig eine, Durchflusskhassen spezifierende und das hülsenförmige Strahlregler-Gehäuse eine, die Strömungsart spezifizierende optische Kodierung aufweist. Auch in der DE 20 2005 010 640 U1 ist nicht näher beschrieben, wie das Filtersieb der vorbekannten Einsetzeinheit mit dem abströmseitig nachgeschalteten Strahlregler verrastet oder dergleichen verbunden sein soll.

Es besteht daher die Aufgabe, ein sanitäres Einbauteil der eingangs erwähnten Art zu schaffen, dessen miteinander verrastbaren Bauteile mit vergleichsweise großen Toleranzen im Bereich ihrer Rast- oder Schnappverbindung und dementsprechend mit vergleichsweise geringem Aufwand herstellbar sind.

Die erfindungsgemäße Lösung dieser Aufgabe besteht bei dem sanitären Einbauteil der eingangs erwähnten Art insbesondere darin, dass eines der Bauteile im Bereich des Rastmittels eine mit Abstand vom Außen- oder Innenumfang dieses Bauteiles vorgesehene Aussparung aufweist, in welche Aussparung der das Rastmittel tragende Wandungsabschnitt dieses Bauteiles federelastisch einlenkbar ist.

Das erfindungsgemäße Einbauteil weist ein erstes Bauteil auf, das als Vorsatz- oder Filtersieb ausgebildet ist und in eine Aufnahmeöffnung eines zweiten Bauteiles einsetzbar und darin mittels Rastmitteln verrastbar ist, wobei das zweite Bauteil als Strahlregler, Durchflussmengenregler oder Rückflussverhinderer ausgestaltet ist. Um diese Bauteile vorzugsweise lösbar miteinander verrasten zu können, ist an dem einen Bauteil zumindest ein Rastmittel und am anderen Bauteil ein als Gegenstück dienendes Gegenrastmittel vorgesehen. Damit diese Bauteile auch mit vergleichsweise großen Toleranzen hergestellt und/oder mit geringem Aufwand verrastet werden können, ist an einem dieser Bauteile im Bereich des Rastmittels eine Aussparung vorgesehen, welche Aussparung mit Abstand vom Außen- oder Innenumfang dieses Bauteiles angeordnet ist und in welche der das außen- oder innenumfangsseitige Rastmittel tragende Wandungsabschnitt dieses Bauteiles federelastisch einlenkbar ist. Da dieser Wandungsabschnitt federelastisch einlenkbar ist und aufgrund der Federelastizität des verwendeten Materials auch wieder in Rastverbindung ausfedern kann, ist zum Verrasten der Bauteile eine reduzierte Einpresskraft bei einem vergleichsweise großen Toleranzfeld der Schnappverbindung möglich. Obwohl das betreffende Bauteil im Bereich seiner Rastmittel zum Zwecke der Verrastung gezielt verformt werden kann, wird die Gesamtkontur dieses Bauteiles erhalten. Aufgrund der gezielten verformbarkeit dieses Bauteiles im Bereich seiner Rastmittel kann dieses Bauteil ansonsten auch mit steifen Wandstärken ausgestaltet werden. Da die Bauteile dennoch mit einer geringen Einpresskraft sicher und fest miteinander verbunden werden können, wird eine rasche und dynamische Montage bei der Herstellung und dem Zusammenbau des erfindungsgemäßen Einbauteiles begünstigt.

Dabei ist es vorteilhaft, wenn das zumindest eine Rastmittel als Rastnut oder Rastnocke ausgebildet ist.

Eine bevorzugte Ausführungsform sieht vor, dass die Aussparung als Schlitz ausgestaltet ist.

Um die sichere und feste Verrastung zwischen den beiden lösbar miteinander verbindbaren Bestand- oder Bauteilen zu begünstigen, sind vorzugsweise mehrere Rastnocken oder Rastmittel vorgesehen, die über den Innen- bzw. Außenumfang des ersten und/oder des zweiten Bauteiles verteilt angeordnet sind.

Eine Weiterbildung gemäß der Erfindung sieht vor, dass die ineinandergreifenden Rastmittel die lagerechte Zuordnung des ersten und des zweiten Bauteiles sicherstellen. Bei dieser weiterbildenden Ausführungsform können die beiden Bauteile derart lagegerecht miteinander verbunden werden, dass diese Bauteile in der beispielsweise in Umfangsrichtung gewünschten Relativposition zueinander gehalten sind.

Dabei kann es zweckmäßig sein, wenn zumindest eine den Rastnocken entsprechende Anzahl von Rastnuten vorgesehen ist. Möglich ist aber auch, dass die an dem einen Bauteil vorgesehenen Rastnocken mit einem an dem anderen Bauteil umlaufenden und flanschartig vorstehenden Rastmittel zusammenwirken.

Dabei sieht eine bevorzugte Ausführungsform gemäß der Erfindung vor, dass die Rastnocken und die Rastnuten im wesentlichen komplementär geformt sind.

Um eine rasche und bequeme Verrastung der beiden Bauteile zu begünstigen, ist es vorteilhaft, wenn die am ersten und am zweiten Bauteil vorgesehenen Rastmittel und Gegenrastmittel jeweils in einer Querschnittsebene angeordnet sind.

Die erfindungsgemäß vorgesehene Ausgestaltung des sanitären Einbauteiles erlaubt es, das Einbauteil auch in seinem Umfangsbereich mit vergleichsweise dicken Umfangswandungen auszugestalten. Dabei kann der Abstand des Schlitzes oder dergleichen Aussparung vom Außen- oder Innenumfang des entsprechenden Bauteiles in Abhängigkeit von der gewünschten Federelastizität des einlenkbaren Wandungsabschnitts gewählt sein, um die zur Verrastung dieser Bauteile benötigte Einpresskraft auf das gewünschte Maß zu bringen.

Die Aussparung, in welche der die außen- oder innenumfangsseitige Rastnut oder Rastnocke tragende Wandungsabschnitt federelastisch einlenkbar ist, kann beispielsweise auch als Sackloch ausgestaltet sein. Um diese Aussparung aber insbesondere als Schlitz ausgestalten oder um den Rastnocken ein entsprechendes Gegen-Rastmittel bereitstellen zu können, ist es zweckmäßig, wenn eines der Bauteile an seinem Außen- oder Innenumfang im Bereich des zumindest einen Rastmittels flanschartig ausgestaltet ist.

Eine bevorzugte Ausführungsform gemäß der Erfindung sieht vor, dass am ersten Bauteil die Rastnocken vorgesehen sind, die mit der zumindest einen Rastnut oder dergleichen Rastmittel am zweiten Bauteil zusammenwirken.

Möglich ist aber auch, dass am zweiten Bauteil die Rastnocken vorgesehen sind, die mit der zumindest einen Rastnut oder dergleichen Gegen-Rastmittel am ersten Bauteil zusammenwirken.

Weitere Einzelheiten der Erfindung ergeben sich aus den Ansprüchen sowie der Zeichnung. Nachstehend wird die Erfindung anhand eines bevorzugten Ausführungsbeispieles noch näher dargestellt.

Es zeigt:
- Fig. 1: eine sanitäre Funktionseinheit, die aus einem Strahlregler, einem Durchflussmengenreglar sowie einem zuströmseitigen Filtersieb besteht,
- Fig. 2: die sanitäre Funktionseinheit aus Figur 1 in einer perspektivischen Darstellung auf ihre Zuströmseite,
- Fig. 3: die sanitäre Funktionseinheit aus Figur 1 und 2 in einer Draufsicht auf ihre Zuströmseite, wobei das aus transparentem Kunststoffmaterial bestehende Filter- sieb auch eine Sichtkontrolle auf den abströmseitig dahinterliegenden Durchflussmengenregler erlaubt,
- Fig. 4: den mit einem Vorsatz- oder Filtersieb verbundenen und als Lochplatte ausgestalteten Strahlzerleger eines ansonsten nicht weiter dargestellten Strahlreg- lers in einem Längsschnitt,
- Fig. 5: das Vorsatz- oder Filtersieb aus Fig. 4 in einer Draufsicht,
- Fig. 6: das Vorsatz- oder Filtersieb und den Strahlzerleger aus Fig. 4 im Bereich ihrer Rast- oder Schnappverbin- dung,
- Fig. 7: die zum Stand der Technik zählende Kombination eines Vorsatzsiebes und eines Strahlreglers in einem Längs- schnitt,
- Fig. 8: das Vorsatz- oder Filtersieb des vorbekannten Strahl- reglers aus Fig. 7,
- Fig. 9: das Vorsatz- oder Filtersieb und den Strahlzerleger des aus dem Stand der Technik vorbekannten Strahlreg- lers im Bereich der Rast- oder Schnappverbindung,
- Fig. 10: einen mit Fig. 4 vergleichbaren Strahlzerleger in einem Längsschnitt, der mit einem Vorsatz- oder Fil- tersieb verrastbar ist,
- Fig. 11: das Vorsatz- oder Filtersieb aus Fig. 10 in einer perspektivischen Darstellung,
- Fig. 12: den Strahlzerleger aus Fig. 10 in einer perspektivi- schen Darstellung,
- Fig. 13: den Strahlzerleger aus Fig. 10 und Fig. 12 in einer Detaildarstellung im Bereich seines, eine innenum- fangsseitige Rastnocke tragenden und durch eine schlitzartige Aussparung begrenzten Wandungs- abschnitts der inneren Umfangswandung,
- Fig. 14: den aus Strahlzerleger und Vorsatzsieb bestehenden Verbund gemäß den Fig. 10 bis 13 im Bereich der mit- einander verrasteten Rastmittel,
- Fig. 15: den mit einem Vorsatzsieb verbundenen und als Loch- platte ausgestalteten Strahlzerleger eines ansonsten nicht weiter dargestellten Strahlreglers in einem Längsschnitt, wobei der Strahlzerleger mit einem zu- strömseitig vorstehenden Ringbund in eine Aufnahme- öffnung des Vorsatzsiebes einführbar ist und wobei an der die Aufnahmeöffnung begrenzenden Ringwandung des Vorsatzsiebes Rastnocken zum lösbaren Verrasten am Strahlzerleger vorgesehen sind,
- Fig. 16: das Vorsatzsieb aus Fig. 15 in einer Unteransicht auf seine abströmseitige Stirnseite,
- Fig. 17: die zwischen dem Vorsatzsieb und dem Strahlzerleger vorgesehene Rastverbindung in einem Detail-Längs- schnitt aus Fig. 15,
- Fig. 18: den mit einem Vorsatzsieb verbundenen und als Loch- platte ausgestalteten Strahlzerleger eines ansonsten nicht weiter dargestellten Strahlreglers in einem Längsschnitt, wobei an dem zuströmseitig vorstehenden und in eine Aufnahmeöffnung einsetzbaren Ringbund des Strahlzerlegers Rastnocken zum lösbaren Verrasten mit dem Vorsatzsieb vorgesehen sind,
- Fig. 19: den Strahlzerleger aus Fig. 18 in einer Draufsicht auf seine zuströmseitige Stirnseite,
- Fig. 20: die in einem Detail-Längsschnitt gezeigte Rastverbin- dung zwischen dem Vorsatzsieb und dem Strahlzerleger aus den Fig. 18 und 19,
- Fig. 21: ein aus einem zuströmseitigen Vorsatzsieb, einem ab- strömseitigen Strahlzerleger und einem dazwischen an- geordneten Durchflussmengenregler bestehendes sani- täres Einbauteil, wobei das aus transparentem Ma- terial bestehende und in einer Aufnahmeöffnung am Strahlzerleger einsetzbare Vorsatzsieb an seinem Siebumfang mehrere Rastnocken zum lösbaren Verrasten mit dem Strahlzerleger aufweist,
- Fig. 22: das Vorsatzsieb aus Fig. 21 in einer Draufsicht auf seine zuströmseitige Stirnseite und
- Fig. 23: die in einem Detail-Längsschnitt gezeigte Rastverbin- dung zwischen dem Vorsatzsieb und dem Strahlzerleger aus den Figuren 21 und 22.

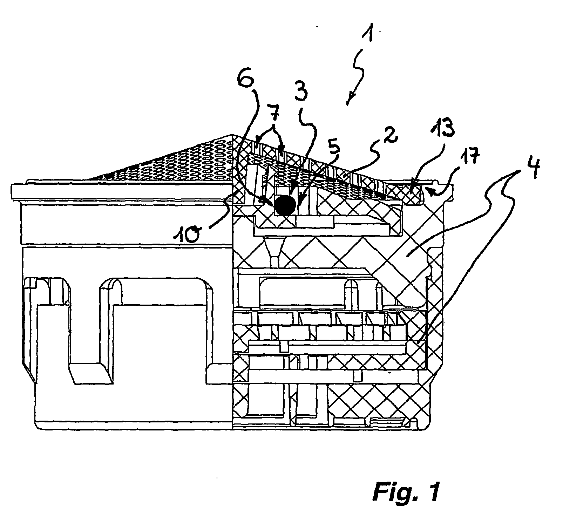

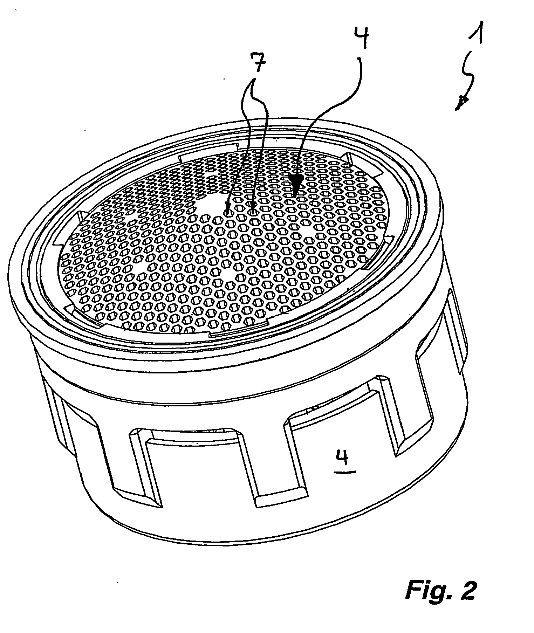

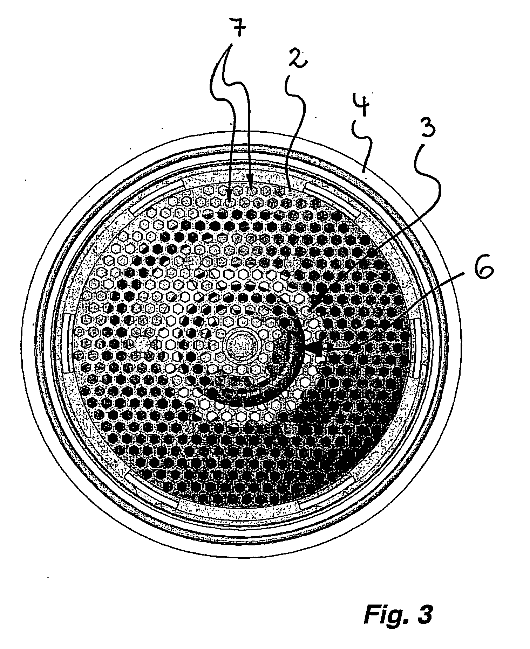

In den Figuren 1 bis 3 ist eine sanitäre Funktionseinheit 1 dargestellt, die in ein nicht weiter gezeigtes Auslaufmundstück einsetzbar ist, welches am Wasserauslauf einer sanitären Auslaufarmatur angeschraubt werden kann. Die sanitäre Funktionseinheit 1 weist ein zuströmseitiges Filter- oder Vorsatzsieb 2 auf, dem abströmseitig ein Durchflussmengenregler 3 und ein Strahlregler 4 nachgeschaltet sind.

Von den lösbar miteinander verbindbaren Bestandteilen 2, 3 und 4 der Funktionseinheit 1 ist der abströmseitige Strahlregler 4 dazu bestimmt, aus dem durchströmenden Wasser einen homogenen, perlend-weichen Wasserstrahl zu formen. Mit dem zwischen Strahlregler 4 und Filtersieb 2 angeordneten Durchflussmengenregler 3 wird die Wassermenge pro Zeiteinheit auf einen festgelegten Maximalwert eingeregelt. Das Filtersieb 2 hat u.a. die Aufgabe, die abströmseitig nachgeschalteten sanitären Einsetzteile 3, 4 vor den im Wasser eventuell mitgeführten Schmutzpartikeln zu bewahren, die andernfalls die Durchflussöffnungen dieser Einsetzteile 3, 4 verstopfen und deren Funktion beeinträchtigen könnten.

Das Filtersieb 2 ist als einstückiges Kunststoffspritzgussteil ausgebildet und aus einem transparenten Kunststoffmaterial hergestellt. Da das Filtersieb 2 aus transparentem Kunststoffmaterial hergestellt ist, gibt es die Sicht auf die Zuströmseite des mit dem Filtersieb 2 lösbar verbundenen sanitären Einsetzteiles 3 frei.

In Figur 1 ist erkennbar, dass der Durchflussmengenregler 3 einen Steuerspalt 5 hat, dessen Durchflussquerschnitt mittels eines unter dem Druck des zuströmenden Wassers verformbaren O-Rings 6 aus elastischem Material veränderbar ist. Da der O-Ring 6 beweglich am Durchflussmengenregler 3 befestigt ist, besteht die Gefahr, dass sich der O-Ring vom Durchflussmengenregler 3 lösen und verloren gehen kann.

Das Filtersieb 2 sichert nun die Funktionalität des Durchflussmengenreglers 3 in mehrfacher Weise; das Filtersieb 2 filtert nämlich zum einen die im Wasser mitgeführten Schmutzpartikel aus, die andernfalls die Funktion der Einsetzteile beeinträchtigen könnten -, zum anderen erlaubt es eine Sichtkontrolle auf die Abströmseite des Filtersiebes 2 und die dahinterliegenden Einsetzteile. Mittels einer bloßen Sichtkontrolle durch das Filtersieb 2 ist gegebenenfalls ohne weiteres erkennbar, dass dem damit verbundenen Durchflussmengenregler 3 der benötigte O-Ring 6 fehlt. Darüber hinaus sichert das mit dem Durchflussmengenregler 3 lösbar verbundene Filtersieb 2 den Durchflussmengenregler 3 gegen einen nachträglichen Verlust seines O-Rings 6.

Durch die Transparenz des Filtersiebes 2 ist es dem Anwender also ohne weiteres möglich, auch bei einem bereits in ein Auslaufmundstück eingesetzten Filtersieb 2 zu erkennen, ob überhaupt und gegebenenfalls welche Einsetzteile 3, 4 abströmseitig folgen und inwieweit diese Einsetzteile 3, 4 funktionsfähig sind.

Die Transparenz des Filtersiebes 2 wird noch dadurch erhöht, dass die Sieböffnungen 7 im wesentlichen koaxial zueinander und etwa achsparallel zur Sieb-Längsachse angeordnet sind. Somit ist auch die Durchsicht durch die Sieböffnungen 7 gewährleistet. Darüber hinaus ist das Filtersieb 2 in Richtung zur Zuströmseite konvex oder kegelförmig gewölbt, so dass eventuelle Schmutzpartikel sich nur am Umfangsrand des Filtersiebes 2 festsetzen und nicht die Siebfläche bedecken und die Sichtkontrolle durch das Sieb 2 behindern können.

Es ist ein besonderer Vorteil eines derart transparenten Filtersiebes, dass durch das Filtersieb 2 auch eine eventuelle Farbcodierung des darunter befindlichen Durchflussmengenreglers 3 erkennbar ist, welche Farbcodierung einen Rückschluss beispielsweise auf die Durchflussleistung dieses Reglers 3 erlaubt.

Das Filtersieb 2 weist in ihrem lichten Sieböffnungsquerschnitt sechseckige und wabenförmig angeordnete Sieböffnungen 7 auf. Durch diese Ausgestaltung der Sieböffnungen 7 des Filtersiebes 2 zeichnet sich das Filtersieb 2 nicht nur durch einen vergleichsweise großen Durchflussquerschnitt aus, vielmehr wird dadurch die Sichtkontrolle durch das Filtersieb 2 noch zusätzlich begünstigt.

Aus Figur 1 ist erkennbar, dass das Filtersieb 2 mittels einer Rastverbindung mit dem Durchflussmengenregler 3 lösbar verbindbar ist. Das Filtersieb 2 weist dazu eine Rastnut 17 auf, die mit zumindest einer Rastnocke 13 oder dergleichen Rastmittel des Strahlreglers 4 lösbar verbindbar ist. Dieser Rastvorsprung 13 ist an der zuströmseitigen Stirnseite des Strahlreglers 4 vorgesehen. Da der Durchflussmengenregler 3 in einer zuströmseitigen Aussparung des Strahlreglers 4 eingesetzt und lösbar befestigt ist, sichert das den Durchflussmengenregler 3 überdeckende Filtersieb 2 auch diesen. Das mit dem Strahlregler 4 lösbar verrastete Filtersieb 2 hat dazu einen abströmseitigen Zentralsteg 10, der den in der Strahlregler-Aussparung befindlichen Durchflussmengenregler 3 zwischen Strahlregler 4 und Filtersieb 2 hält.

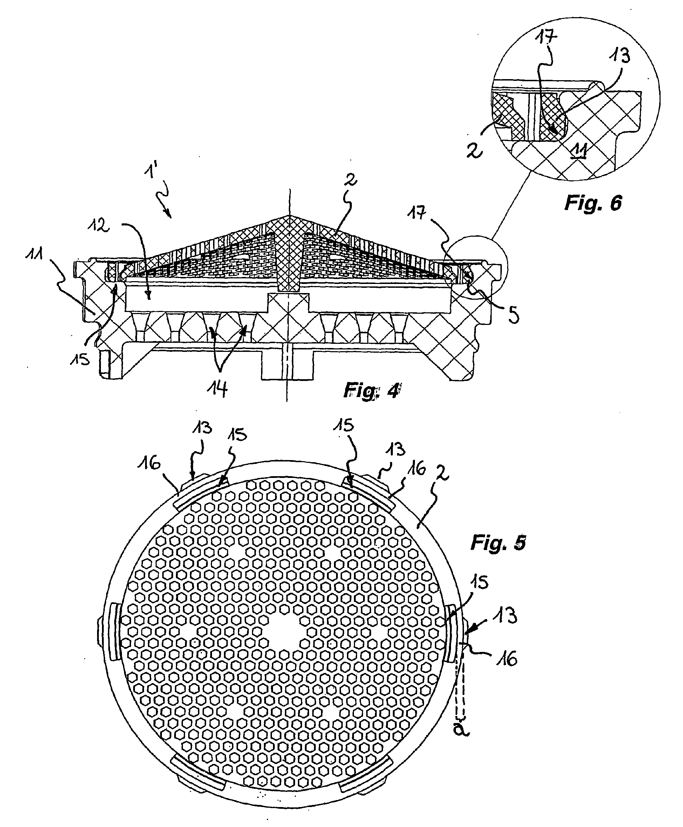

In den Fig. 4 bis 6 ist ein sanitäres Einbauteil 1' im Bereich eines zu einem ansonsten nicht weiter dargestellten Strahlregler gehörenden Strahlzerlegers 11 gezeigt. Der als Lochplatte ausgebildete und das zuströmende Wasser in zahlreiche Einzelstrahlen aufteilende Strahlzerleger 11 weist eine Aufnahmeöffnung 12 auf, in die ein zuströmseitiges Vorsatzsieb 2 lösbar einsetzbar ist. Während das Vorsatzsieb 2 ein erstes Bauteil bildet, ist der Strahlzerleger 11 hier als zweites Bauteil des auch aus weiteren Bestandteilen montierten Strahlreglers vorgesehen.

Die Bauteile 2, 11 sind mittels Rastmitteln lösbar verrastbar. Dazu sind am Vorsatzsieb 2 mehrere Rastnocken 13 vorgesehen, die in gleichmäßigen Abständen voneinander über den flanschartig ausgestalteten Außenumfang des Vorsatzsiebes 2 verteilt angeordnet sind.

Das Vorsatzsieb 2, dass im Wasser mitgeführte Schmutzpartikel von den Durchflussöffnungen 14 des Strahlzerlegers 11 fernhalten soll, weist im Bereich der Rastnocken 13 jeweils einen Schlitz 15 oder dergleichen Aussparung auf, der mit einem Abstand a vom Außenumfang dieses ersten Bauteiles 11 angeordnet ist. Jeder dieser Schlitze weist eine in Umfangsrichtung orientierte Längserstreckung auf. Zwischen dem Außenumfang des ersten Bauteiles 11 und den benachbarten Schlitzen 15 wird jeweils ein das außenumfangsseitige Rastmittel 13 tragender Wandungsabschnitt 16 begrenzt, der in den Schlitz 15 oder dergleichen Aussparung federelastisch einlenkbar ist. Da dieser Wandungsabschnitt 16 federelastisch einlenkbar ist und aufgrund der Federelastizität auch wieder verrastend ausfedern kann, ist zum Verrasten der Bauteile 2, 11 eine reduzierte Einpresskraft bei einem vergleichsweise großen Toleranzfeld der Schnappverbindung möglich.

Die am Vorsatzsieb 2 vorgesehenen Rastnocken 13 können in einer umlaufenden Rastnut 17 an dem die Aufnahmeöffnung 12 begrenzenden Innenumfang des Strahlzerlegers 11 verrastet werden. Möglich ist aber auch, dass zumindest eine den Rastnocken 13 entsprechende Anzahl von partiellen Rastnuten vorgesehen sind und dass durch diese ineinandergreifenden Rastmittel die lagegerechte Zuordnung des ersten und des zweiten Bauteiles sichergestellt werden soll.

Wie aus der Draufsicht in Fig. 5 deutlich wird, verjüngen sich die Rastnocken 13 derart zu ihrem freien Nockenende hin, dass die in Umfangsrichtung orientierten Ränder der Rastnocken eine Schräge bilden. Aus Fig. 6 wird deutlich, dass die während des Ein- und Ausrastens aneinander gleitenden Kontaktflächen der Rastnocke einerseits und des die Rastnut begrenzenden Umfangsrandes andererseits korrespondierende Ein- und Ausrastschrägen haben, die das Einpressen des Vorsatzsiebes in die entsprechende Aussparung des Strahlzerlegers und das Verrasten dieser Bauteile einerseits, - bedarfsweise aber auch das Entrasten und Lösen dieser Bauteile andererseits, mit geringem Aufwand erlauben und erleichtern. Soweit die Rastmittel 13, 17 eine lagegerechte Zuordnung der Bauteile 2, 11 sicherstellen sollen, ist es zweckmäßig, wenn sich die Anzahl von Rastnocken und Rastnuten entsprechen bzw. wenn die Anzahl der Rastnuten ein Vielfaches derjenigen der Rastnocken beträgt und wenn die Rastnocken und die Rastnuten im wesentlichen komplementär geformt sind.

Aus den Längsschnitten in Fig. 4 und 6 wird deutlich, dass die am Vorsatzsieb 2 vorgesehenen Rastnocken 13 in einer Querschnittsebene angeordnet sind. Diese in einer Querschnittsebene angeordnete Rastnocken 13 lassen sich mit geringem Aufwand in die Querschnittsebene der am Strahlzerleger 11 umlaufenden Rastnut 17 verrasten.

Um die Rastmittel 13, 17 auch bei einer vergleichsweise dickwandigen und biegesteifen Ausgestaltung der Bauteile 13, 17 leicht und mit geringer Einpresskraft miteinander verrasten und voneinander lösen zu können, ist der Abstand a des Schlitzes 15 oder dergleichen Aussparung vom Außenumfang des ersten Bauteiles 2 und somit die Dicke des einlenkbaren Wandungsabschnitts 16 in Abhängigkeit von der gewünschten Federelastizität dieses Wandungsabschnitts 16 gewählt.

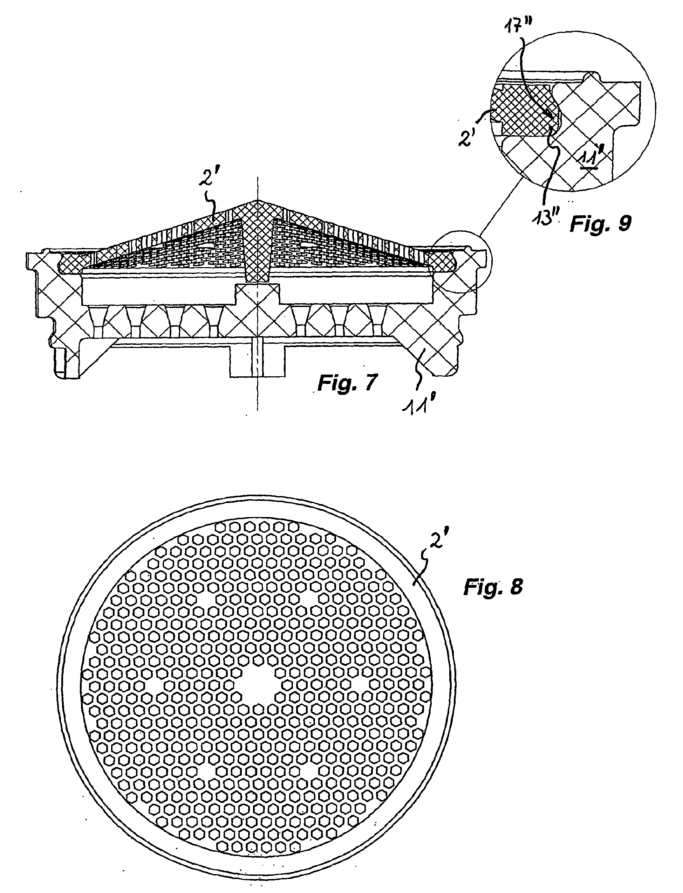

Zum Vergleich ist in den Fig. 7 bis 9 die gemäß dem vorbekannten Stand der Technik ausgestaltete Kombination eines Strahlzerlegers 11' und eines Vorsatzsiebes 2' dargestellt. Wie aus dem Längsschnitt in Fig. 7 zu erkennen ist, weist das Vorsatzsieb 2' an seinem Außenumfang eine umlaufende Rastnocke 13" auf, die in die ebenfalls umlaufende Rastnut 17" am Strahlzerleger 11' eingreift. Da diese Rastmittel 13" , 17'' beim Stand der Technik gemäß den Fig. 7 bis 9 vergleichsweise biegesteif sind, müssen die Bauteile 2', 11' mit hoher Genauigkeit und großem Aufwand hergestellt und mit hohem Einpressdruck miteinander verrastet werden.

Im Gegensatz dazu ist beim Einbauteil gemäß den Fig. 4 bis 6 zum Verrasten der Bauteile 2, 11 eine reduzierte Einpresskraft notwendig. Dabei können die Bauteile 2, 11 mit einem vergleichsweise großen Toleranzfeld der Schnappverbindung hergestellt werden. Obwohl das erste Bauteil 2 im Bereich seiner Rastmittel 13 zum Zwecke des Verrastens gezielt verformt werden kann, wird die Gesamtkontur des ersten Bauteiles 2 im Vergleich zum Bauteil 2' im Stand der Technik erhalten. Da bei der erfindungsgemäßen Funktionseinheit 1' die Bauteile 2, 11 auch mit einer geringeren Einpresskraft sicher und fest miteinander verbunden werden können, wird eine rasche und dynamische Montage bei der Herstellung und dem Zusammenbau des in Fig. 4 bis 6 dargestellten Einbauteiles 1' begünstigt.

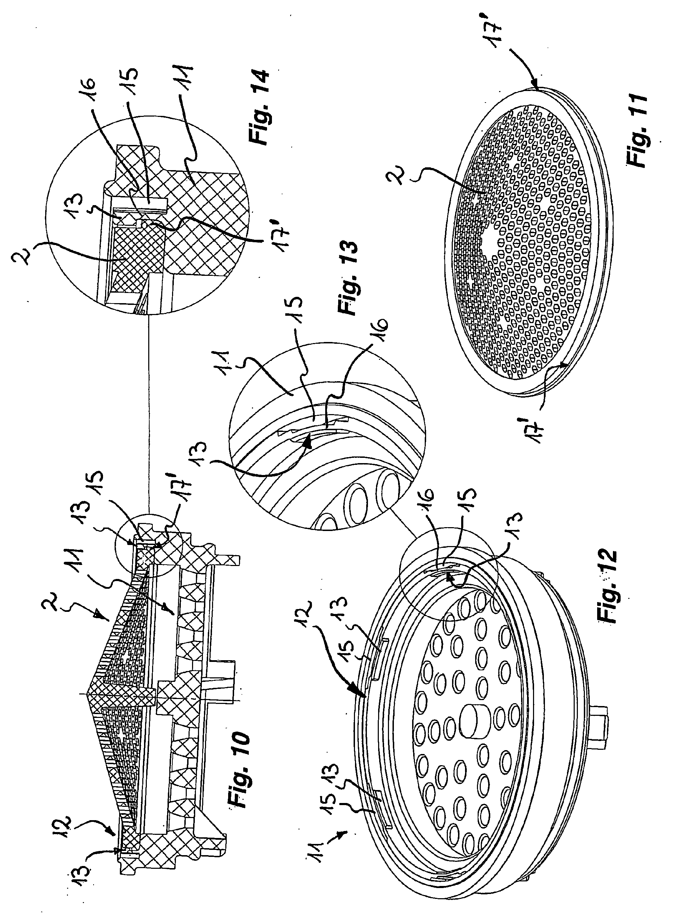

In den Fig. 10 bis 14 sind der als Lochplatte ausgestaltete Strahlzerleger 11 und das Vorsatzsieb 2 eines mit Fig. 4 bis 6 vergleichbaren Strahlreglers dargestellt. Bei dem in den Fig. 10 bis 14 dargestellten Strahlregler weist jedoch der Strahlzerleger 11 an dem die Aufnahmeöffnung 12 begrenzenden inneren Umfangsrand eine Anzahl von Rastnocken 13 auf, die mit einem als Rast-Gegenstück dienenden und flanschartig umlaufenden Rastvorsprung 17' am Vorsatzsieb 2 zusammenwirken.

Die innenumfangsseitig am Strahlzerleger 11 vorgesehenen Rastnocken 13 sind jeweils in einen Schlitz 15 oder dergleichen Aussparung federelastisch einlenkbar. Diese Aussparungen 15 sind an dem die das Vorsatzsieb 2 aufnehmenden Aufnahmeöffnung 12 begrenzenden Umfangsinnenrand des Strahlzerlegers 11 im Bereich der Rastnocken 13 vorgesehen.

Aus Fig. 12 wird deutlich, dass die Rastnocken 13 über den Innenumfang des Strahlzerlegers 11 gleichmäßig verteilt angeordnet sind. Fig. 13 veranschaulicht, dass der Abstand a des Schlitzes 15 oder dergleichen Aussparung vom Innenumfang des Strahlzerlegers 11 in Abhängigkeit von der gewünschten Federelastizität des einlenkbaren Wandungsabschnitts 16 gewählt sein kann.

Aus einem Vergleich der Fig. 11 und 14 ist zu erkennen, dass das Vorsatzsieb 2 an seinem Außenumfang im Bereich des mit den Rastnocken 13 zusammenwirkenden, umlaufenden Rast-Gegenstücks 17' flanschartig ausgestaltet ist.

In Fig. 14 ist erkennbar, dass die einander gegenüberliegenden Stirnränder der Rastnocken 13 einerseits und des am Vorsatzsieb 2 vorgesehenen Rast-Gegenstücks 17' andererseits scharfkantig ausgestaltet sind. Durch diese scharfkantige Ausgestaltung kann das Vorsatzsieb 2 mit dem entsprechenden Strahlzerleger 11 nahezu unlösbar verbunden werden. Möglich ist aber auch, an die einander gegenüberliegenden Stirnrändern der Rastnocken einerseits und des Rast-Gegenstücks 17' andererseits komplementär geformte Auflaufschrägen vorzusehen, die bei Bedarf auch ein Entrasten und Lösen dieser Bauteile 2, 11 erlauben.

Um ein federelastisches Einlenken der Rastnocken 13 oder dergleichen Rastmittel zu gestatten, können die entsprechenden Aussparungen 15 segmentiert und auf den Bereich der Rastnocken 13 oder dergleichen Rastmittel begrenzt werden. Möglich ist aber auch, die zum Einlenken der Rastnocken 13 bestimmte Aussparung 15 über den Bereich der Rastnocken 13 hinaus umlaufend auszugestalten.
Sofern die beiden Bauteile 2, 11 unlösbar miteinander verbunden werden sollen, kann es zweckmäßig sein, dass flanschartige Rast-Gegenstück 17' am Vorsatzsieb in entsprechenden Umfangssegmenten scharfkantig und in anderen Umfangssegmenten gerundet oder abgeschrägt auszugestalten, um den Herstellungsaufwand zu reduzieren und um ein entsprechendes Spritzgussteil auch aus einer vergleichsweise einfachen Spritzgussform leicht entformen zu können.

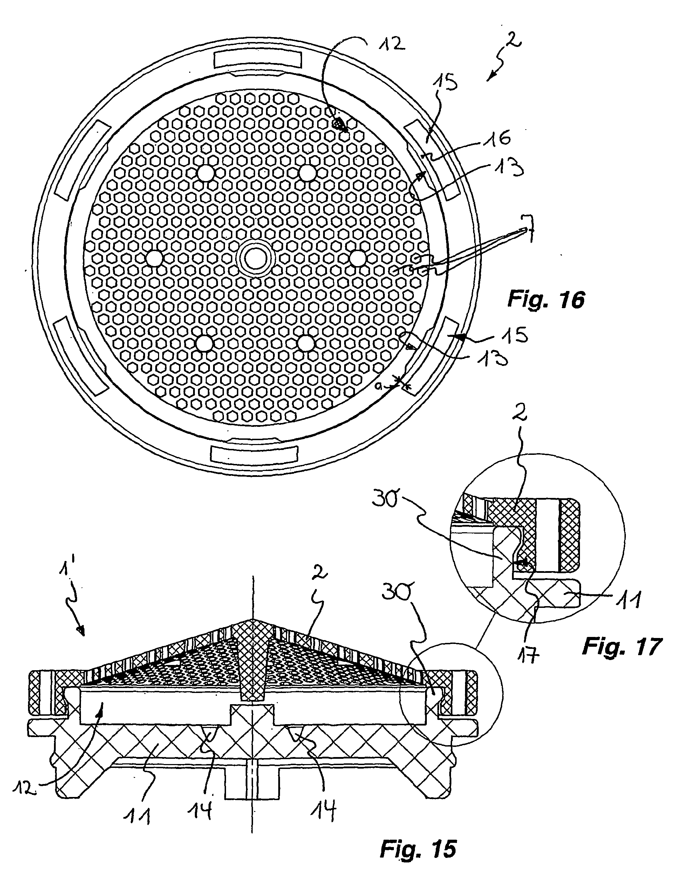

In den Figuren 15 bis 17 ist ein sanitäres Einbauteil 1' im Bereich eines, zu einem ansonsten nicht weiter dargestellten Strahlregler gehörenden Strahlzerlegers 11 gezeigt. Der als Lochplatte ausgebildete und das zuströmende Wasser in zahlreiche Einzelstrahlen aufteilende Strahlzerleger 11 weist an seiner zuströmseitigen Stirnseite einen axial vorstehenden Ringbund 30 auf, der außenumfangsseitig eine Rastnut 17 trägt und in eine Aufnahmeöffnung 12 des Vorsatzsiebes 2 einsetzbar ist. Wie aus der in Fig. 16 gezeigten Unteransicht auf die abströmseitige Stirnseite des Vorsatzsiebes 2 erkennbar ist, weist das Vorsatzsieb 2 an seinem, die Aufnahmeöffnung 12 begrenzenden Innenumfang mehrere Rastnocken 13 auf, die in gleichmäßigen Abständen über den Siebumfang verteilt angeordnet sind.

Während das Vorsatzsieb 2 ein erstes Bauteil bildet, ist der Strahlzerleger 11 hier als zweites Bauteil des auch aus weiteren Bestandteilen montierten Strahlreglers vorgesehen. Die Bauteile 2, 11 sind mittels Rastmitteln lösbar verrastbar. Das Vorsatzsieb 2, das im Wasser mitgeführte Schmutzpartikel von den hier nicht in der Schnittebene liegenden und daher nur angedeuteten Durchflussöffnungen 14 des Strahlzerlegers 11 fernhalten soll, weist im Bereich der Rastnocken 13 jeweils einen Schlitz 15 oder dergleichen Aussparung auf, der mit einem Abstand a vom Innenumfang dieses ersten Bauteiles 11 angeordnet ist. Jeder dieser Schlitze 15 weist eine in Umfangsrichtung orientierte Längserstreckung auf.

Zwischen dem Innenumfang des ersten Bauteiles 2 und den benachbarten Schlitzen 15 wird jeweils ein das innenumfangseitige Rastmittel 13 tragender Wandungsabschnitt 16 begrenzt, der in den Schlitz 15 oder dergleichen Aussparung federelastisch einlenkbar ist. Da dieser Wandungsabschnitt 16 federelastisch einlenkbar ist und aufgrund der Federelastizität auch wieder verrastend ausfedern kann, ist zum Verrasten der Bauteile 2, 11 eine reduzierte Einpresskraft bei einem vergleichsweise großen Toleranzfeld der Schnappverbindung möglich. Wie aus dem Detail-Längsschnitt in Fig. 17 erkennbar ist, können die am Vorsatzsieb 2 vorgesehenen Rastnocken 13 in einer umlaufenden Rastnut 17 am Ringbund 30 des Strahlzerlegers 11 verrastet werden. Möglich ist aber auch, dass zumindest eine den Rastnocken 13 entsprechende Anzahl von partiellen Rastmitteln vorgesehen sind und dass durch diese ineinandergreifenden Rastmittel die lagegerechte Zuordnung des ersten und des zweiten Bauteiles 2, 11 sichergestellt werden soll.

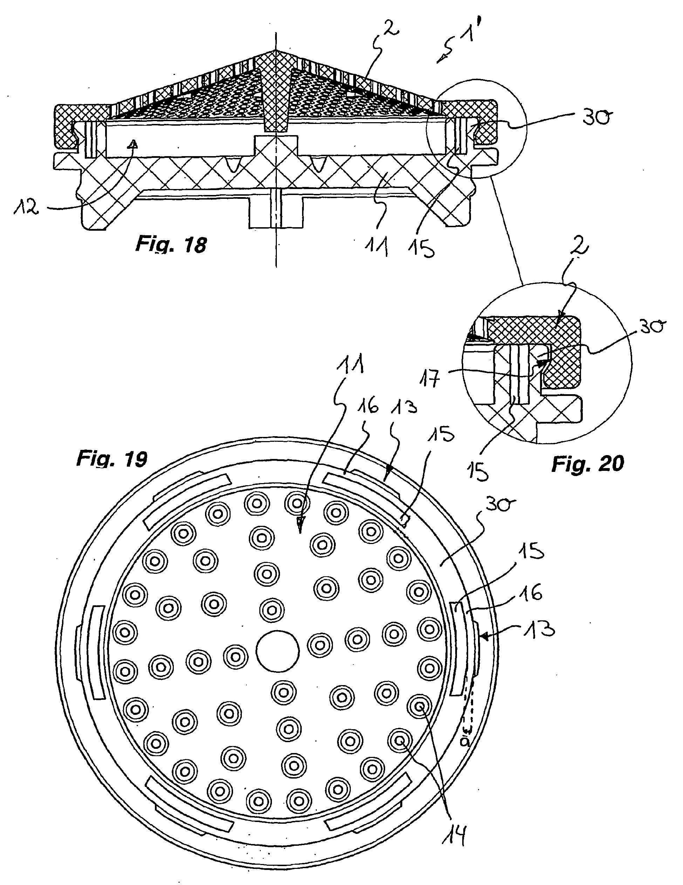

Demgegenüber weist das Einbauteil 1' in den Fig. 18 bis 20 an dem in die Aufnahmeöffnung 12 des Vorsatzsiebes 2 einsetzbaren Ringbund 30 des Strahlzerlegers 11 eine Anzahl von radial nach außen vorstehenden Rastnocken 13 auf, die in einer Rastnut 17 an dem die Aufnahmeöffnung 12 begrenzenden Innenumfang des Vorsatzsiebes 2 einrasten können. Im Bereich der Rastnocken 13 ist jeweils ein Schlitz 15 oder dergleichen Aussparung vorgesehen, der mit einem Abstand a vom Außenumfang des als Ringbund 30 ausgebildeten Teilbereichs des Strahlzerlegers 11 angeordnet ist. Jeder dieser Schlitze 15 weist eine in Umfangsrichtung orientierte Längserstreckung auf. Zwischen dem Innenumfang des Strahlzerlegers 11 und den benachbarten Schlitzen 15 wird jeweils ein das außenumfangseitige Rastmittel 13 tragender Wandungsabschnitt 16 begrenzt, der in dem Schlitz 15 oder dergleichen Aussparung federelastisch eingelenkt werden kann.

Aus einem Vergleich der Figuren 15 bis 17 beziehungsweise 18 bis 20 einerseits und der Figuren 4 bis 6 beziehungsweise 7 bis 9 andererseits wird deutlich, dass das Vorsatzsieb 2 nicht nur in einer Aufnahmeöffnung 12 am Strahlzerleger 11 montiert werden kann, sondern dass vielmehr auch der Strahlzerleger 11 in einer Aufnahmeöffnung 12 des Vorsatzsiebes 2 montierbar ist.

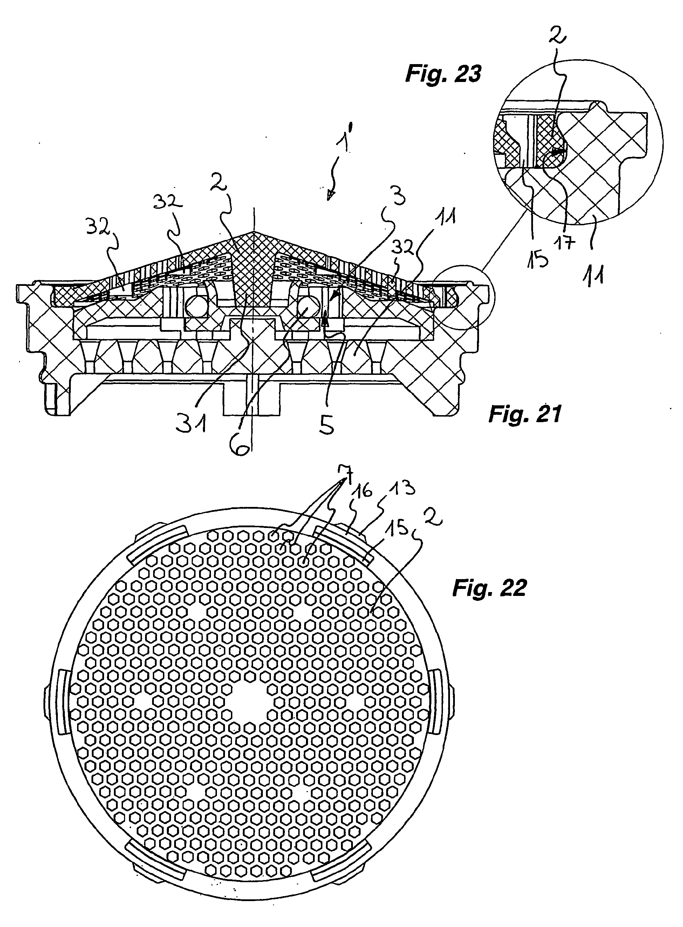

In den Figuren 21 bis 23 ist ein sanitäres Einbauteil 1' dargestellt, das in ein nicht weiter gezeigtes Auslaufmundstück einsetzbar ist, welches am Wasserauslauf einer sanitären Auslaufarmatur angeschraubt werden kann. Das sanitäre Einbauteil 1' weist ein zuströmseitiges Vorsatzsieb 2 auf, dem abströmseitig ein Durchflussmengenregler 3 und ein Strahlregler nachgeschaltet sind, von welchem Strahlregler hier allerdings nur der Strahlzerleger 11 gezeigt ist.

Von den lösbar miteinander verbindbaren Bestandteilen 2, 3 und 11 ist der abströmseitige Strahlregler dazu bestimmt, aus dem durchströmenden Wasser einen homogenen, perlend-weichen Wasserstrahl zu formen. Mit dem zwischen Strahlzerleger 11 und Vorsatzsieb 2 angeordneten Durchflussmengenregler 3 wird die Wassermenge pro Zeiteinheit auf einen festgelegten Maximalwert eingeregelt. Das Vorsatzsieb 2 hat u.a. die Aufgabe, die abströmseitig nachgeschalteten sanitären Einsetzteile 3, 11 vor den im Wasser eventuell mitgeführten Schmutzpartikeln zu bewahren, die anderenfalls die Durchflussöffnungen dieser Einsetzteile 3, 11 verstopfen und deren Funktion beeinträchtigen könnten.

Das Vorsatzsieb 2 ist als einstückige Kunststoffspritzgussteil ausgebildet und aus einem transparenten Kunststoffmaterial hergestellt. Da das Vorsatz- oder Filtersieb 2 aus transparentem Kunststoffmaterial hergestellt ist, gibt es die Sicht auf die Zuströmseite des mit dem Vorsatzsieb 2 lösbar verbundenen sanitären Einsetzteiles 3 frei. In Fig. 21 ist erkennbar, dass der Durchflussmengenregler 3 einen Steuerspalt 5 hat, dessen Durchflussquerschnitt mittels eines unter dem Druck des zuströmenden Wassers verformbaren O-Ring 6 aus elastischem Material veränderbar ist. Da der O-Ring 6 beweglich am Durchflussmengenregler 3 befestigt ist, besteht die Gefahr, dass sich der O-Ring vom Durchflussmengenregler 3 lösen und verloren gehen kann. Das aus transparentem Material bestehende Vorsatzsieb 2 sichert nun die Funktionalität des Durchflussmengenreglers 3 in mehrfacher Weise; das Vorsatzsieb 2 filtert nämlich zum einen die im Wasser mitgeführten Schmutzpartikel aus, die anderenfalls die Funktion der Einsetzteile 3, 11 beeinträchtigen könnten -, zum anderen erlaubt es eine Sichtkontrolle auf die Abströmseite des Filter- oder Vorsatzsiebes 2 und die dahinterliegenden Einsetzteile. Blickt man von oben durch das aus transparentem Material bestehende Vorsatzsieb 2 hindurch, so lässt sich erkennen, ob das sanitäre Einbauteil 1 in Fig. 21 überhaupt mit einem Mengenregler 3 bestückt ist. Weist dieser Durchflussmengenregler 3 zudem noch eine Farbcodierung auf, so lässt sich bereits durch das Vorsatzsieb 2 erkennen, welche hydraulische Durchflussleistung der zwischen Vorsatzsieb 2 und Strahlzerleger 11 angeordnete Durchflussmengenregler 3 hat. Mittels einer bloßen Sichtkontrolle durch das Vorsatzsieb 2 ist gegebenenfalls auch ohne weiteres erkennbar, ob der Durchflussmengenregler 3 den benötigen O-Ring 6 aufweist. Da der Durchflussmengenregler 3 zwischen dem Vorsatzsieb 2 einerseits und dem mit dem Vorsatzsieb 2 verrasteten Strahlzerleger 11 andererseits eingeklemmt ist, sichert das Vorsatzsieb 2 den Durchflussmengenregler 3 auch gegen einen nachträglichen Verlust seines O-Rings 6.

Aus Fig. 21 wird deutlich, dass sich der Durchflussmengenregler 3 auf der zuströmseitigen Stirnseite des Strahlzerlegers 11 und das transparente Vorsatzsieb 2 seinerseits mit einem zentralen Stützsteg 31 auf dem Durchflussmengenregler 3 abstützt. Bei verschmutzten Sieboberflächen des Vorsatzsiebes 2 wird nämlich die Belastung, die von oben auf das Vorsatzsieb 2 wirkt, sehr groß. Um zu verhindern, dass das Vorsatzsieb 2, welches aus transparentem Material gefertigt ist und eventuell eine reduzierte Eigensteifigkeit aufweist, in solchen Belastungsfällen kollabiert, stützt sich das Vorsatzsieb 2 über seinen zentralen Stützsteg 31 und/oder über zusätzliche, am Siebumfang verteilte Abstützungen 32 auf dem Reglergehäuse des Durchflussmengenreglers 3 ab. In Fig. 21 ist erkennbar, dass zwischen dem Vorsatzsieb 2 und dem Durchflussmengenregler 3 in unbelasteter Gebrauchsstellung zunächst noch ein Luftspalt insbesondere im Bereich der über den Siebumfang verteilt angeordneten Abstützungen 32 verbleibt. Erst wenn sich das Vorsatzsieb 2 unter der Last des zuströmenden Wassers deutlich zu verformen beginnt, können sich die Abstützungen 32 am Durchflussmengenregler 3 abstützen und das Vorsatzsieb 2 gegen ein übermäßiges Verformen sichern.

## Patentansprüche

1. Sanitäres Einbauteil (1') mit zumindest zwei Bauteilen (2, 11), von denen das erste Bauteil (2, 11) als ein vorsatz- oder Filtersieb (2) ausgebildet ist und in eine Aufnahmeöffnung (12) des als Strahlregler, Durchflussmengenregler oder Rückflussverhinderer ausgebildeten zweiten Bauteiles (11, 2) einsetzbar ist, wobei die Bauteile (2, 11) miteinander verrastbar sind und hierzu ein Bauteil zumindest ein Rastmittel (13) und das andere Bauteil ein diesem Rastmittel (13) als Gegenstück dienendes Gegenrastmittel (17, 17') aufweist, wobei eines dieser Bauteile (2, 11) das Rastmittel außen- oder innenumfangsseitig an einem Nandungsabschnitt (16) trägt, **dadurch gekennzeichnet, dass** eines der Bauteile (2, 11) im Bereich des Rastmittels eine mit Abstand (a) vom Außen- oder Innenumfang dieses Bauteiles (4) vorgesehene Aussparung aufweist, in welche Aussparung der das Rastmittel tragende Wandungsabschnitt (16) dieses Bauteiles federelastisch einlenkbar ist.

2. Einbauteil nach Anspruch 1, **dadurch gekennzeichnet, dass** das zumindest eine Rastmittel als Rastnut oder Rastnocke ausgebildet ist.

3. Einbauteil nach Anspruch 1 oder 2, **dadurch gekennzeichnet, dass** die Aussparung als Schlitz (15) ausgestaltet ist.

4. Einbauteil nach Anspruch 2 oder 3, **dadurch gekennzeichnet, dass** mehrere Rastnocken (13) oder Rastmittel vorgesehen sind, die über den Innen- beziehungsweise Außenumfang des ersten und/oder des zweiten Bauteiles (2, 11) verteilt angeordnet sind.

5. Einbauteil nach einem der Ansprüche 1 bis 4, **dadurch gekennzeichnet, dass** die ineinandergreifenden Rastmittel (13, 17, 17') die lagegerechte Zuordnung des ersten und des zweiten Bauteiles (2, 11) sicherstellen.

6. Einbauteil nach Anspruch 4 oder 5, **dadurch gekennzeichnet, dass** zumindest eine den Rastnocken entsprechende Anzahl von Rastnuten oder dergleichen Rastmitteln vorgesehen ist.

7. Einbauteil nach Anspruch 6, **dadurch gekennzeichnet, dass** die Rastnocken und die Rastnuten im wesentlichen komplementär geformt sind.

8. Einbauteil nach Anspruch 6 oder 7, **dadurch gekennzeichnet, dass** die am ersten und am zweiten Bauteil (2, 11) vorgesehenen Rastmittel und Gegenrastmittel (13, 17, 17') jeweils in einer Querschnittsebene angeordnet sind.

9. Einbauteil nach einem der Ansprüche 1 bis 8, **dadurch gekennzeichnet, dass** der Abstand (a) der Aussparung vom Außen- oder Innenumfang des entsprechenden Bauteiles (2, 11) in Abhängigkeit von der gewünschten Federelastizität des einlenkbaren Wandungsabschnitts (16) gewählt ist.

10. Einbauteil nach einem der Ansprüche 1 bis 9, **dadurch gekennzeichnet, dass** eines der Bauteile (2, 11) an seinem Außen- oder Innenumfang im Bereich des zumindest einen Rastmittels flanschartig ausgestaltet ist.

11. Einbauteil nach einem der Ansprüche 4 bis 10, **dadurch gekennzeichnet, dass** am ersten Bauteil (2, 11) die Rastnocken (13) vorgesehen sind, die mit der zumindest einen Rastnut oder dergleichen Rastmittel (17, 17') am zweiten Bauteil (11, 2) zusammenwirken.

12. Einbauteil nach einem der Ansprüche 4 bis 10, **dadurch gekennzeichnet, dass** am zweiten Bauteil (11, 2) die Rastnocken (13) vorgesehen sind, die mit der zumindest einen Rastnut oder dergleichen Gegenrastmittel (17, 17') am ersten Bauteil (2, 11) zusammenwirken.

## Claims

1. Plumbing insert (1') having at least two components (2, 11), the first component (2, 11) being embodied as as preliminary or filtering sieve (2) and being insertable in an accommodating opening (12) of the second component (11, 2) which is embodied as a jet regulator, flow rate regulator or backflow preventer, the components (2, 11) being latchable to one another, and for this purpose one component comprises at least one latching means (13) and the other component comprises mating latching means (17,17') serving as a counterpart to the latching means (13), one of these components (2, 11) carrying the latching means on a wall portion (16) on the outer or inner circumferential side, **characterised in that** one of the components (2, 11) comprises in the region of the latching means a recess provided at a spacing (a) from the outer or inner circumference of this component (4), Into which the wall portion (16) of this component carrying the latching means can be guided under spring bias.

2. Insert according to claim 1, **characterised in that** the at least one latching means is embodied as a latching groove or latching cam.

3. Insert according to claim 1 or 2, **characterised in that** the recess is embodied as a slot (15).

4. Insert according to claim 2 or 3, **characterised in that** a plurality of latching cams (13) or latching means are provided which are distributed over the inner or outer circumference of the first and/or second component (2, 11),

5. Insert according to one of claims 1 to 4, **characterised in that** the latching means (13, 17, 17') engaging in one another secure the positional relationship between the first and second components (2, 11).

6. Insert according to claim 4 or 5, **characterised in that** a number of latching grooves or similar latching means that at least corresponds to the latching cams are provided.

7. Insert according to claim 6, **characterised in that** the latching cams and the latching grooves are of substantially complementary shape.

8. Insert according to claim 6 or 7, **characterised in that** the latching means and mating latching means (13, 17, 17') provided on the first and second components (2. 11) are each arranged in a cross-sectional plane.

9. Insert according to one of claims 1 to 8, **characterised in that** the spacing (a) of the recess from the outer or inner circumference of the corresponding component (2.11) is selected as a function of the desired springy elasticity of the guidable wall portion (16).

10. Insert according to one of claims 1 to 9, **characterised in that** one of the components (2, 11) is of flange-like construction on its outer or inner circumference in the region of the at least one latching means.

11. Insert according to one of claims 4 to 10, **characterised in that** on the first component (2, 11) are provided the latching cams (13) which cooperate with the at least one latching groove or similar latching means (17, 17') on the second component (11, 2).

12. Insert according to one of claims 4 to 10, **characterised in that** on the second component (11, 2) are provided the latching cams (13) which cooperate with the at least one latching groove or similar mating latching means (17, 17') on the first component. (2, 11).

## Revendications

1. Pièce intégrée sanitaire (1') composée d'au moins deux parties structurelles (2, 11) parmi lesquelles la première partie structurelle (2, 11) est réalisée sous la forme d'un embout de tamisage, ou d'un tamis filtrant (2), et peut être insérée dans un orifice de réception (12) de la seconde partie structurelle (11, 2) réalisée sous la forme d'un régulateur de jets, d'un régulateur de débits ou d'un dispositif anti-reflux, lesdites parties structurelles (2, 11) pouvant être reliées l'une à l'autre par encliquetage et, à cette fin, une partie structurelle étant munie d'au moins un moyen d'encliquetage (13) et l'autre partie structurelle étant pourvue d'un moyen d'encliquetage concordant (17, 17'), servant d'organe complémentaire à ce moyen d'encliquetage (13), sachant que l'une de ces parties structurelles (2, 11) porte ledit moyen d'encliquetage du côté périphérique extérieur ou intérieur, sur une zone de paroi (16), **caractérisée par le fait que** l'une des parties structurelles (2, 11) comporte un évidement prévu à distance (a) du pourtour extérieur ou intérieur de cette partie structurelle, dans la région du moyen d'encliquetage, évidement dans lequel la zone de paroi (16) de cette partie structurelle, portant ledit moyen d'encliquetage, peut être emboîtée élastiquement.

2. Pièce intégrée selon la revendication 1, **caractérisée par le fait que** le moyen d'encliquetage à présence minimale est réalisé sous la forme d'une rainure d'encliquetage, ou d'une came encliquetable.

3. Pièce intégrée selon la revendication 1 ou 2, **caractérisée par le fait que** l'évidement revêt la forme d'une fente (15).

4. Pièce intégrée selon la revendication 2 ou 3, **caractérisée par** la présence de plusieurs cames encliquetables (13), ou moyens d'encliquetage, agencé(e)s avec répartition sur le pourtour respectivement intérieur ou extérieur de la première et/ou de la seconde partie(s) structurelle(s) (2, 11).

5. Pièce intégrée selon l'une des revendications 1 à 4, **caractérisée par le fait que** les moyens d'encliquetage (13, 17, 17'), s'interpénétrant, assurent l'assignation mutuelle en position correcte des première et seconde parties structurelles (2, 11).

6. Pièce intégrée selon la revendication 4 ou 5, **caractérisée par** la présence d'au moins un nombre de rainures d'encliquetage, ou de moyens d'encliquetage similaires, correspondant aux cames encliquetables.

7. Pièce intégrée selon la revendication 6, **caractérisée par le fait que** les cames encliquetables et les rainures d'encliquetage offrent, pour l'essentiel, des profils complémentaires.

8. Pièce intégrée selon la revendication 6 ou 7, **caractérisée par le fait que** les moyens d'encliquetage et les moyens d'encliquetage concordants (13, 17, 17'), prévus sur les première et seconde parties structurelles (2, 11), sont respectivement disposés dans un plan de section transversale.

9. Pièce intégrée selon l'une des revendications 1 à 8, **caractérisée par le fait que** la distance (a), comprise entre l'évidement et le pourtour extérieur ou intérieur de la partie structurelle (2, 11) correspondante, est choisie en fonction de l'élasticité souhaitée de la zone de paroi (16) apte à l'emboîtement.

10. Pièce intégrée selon l'une des revendications 1 à 9, **caractérisée par le fait que** l'une des parties structurelles (2, 11) est configurée à la manière d'une collerette sur son pourtour extérieur ou intérieur, dans la région du moyen d'encliquetage à présence minimale.

11. Pièce intégrée selon l'une des revendications 4 à 10, **caractérisée par le fait que** les cames encliquetables (13) sont prévues sur la première partie structurelle (2, 11) et coopèrent avec la rainure d'encliquetage ou le moyen similaire d'encliquetage (17, 17') à présence minimale, sur la seconde partie structurelle (11, 2).

12. Pièce intégrée selon l'une des revendications 4 à 10, **caractérisée par le fait que** les cames encliquetables (13) sont prévues sur la seconde partie structurelle (11, 2) et coopèrent avec la rainure d'encliquetage ou le moyen similaire d'encliquetage (17, 17') à présence minimale, sur la première partie structurelle (2,11).
